# EUROPEAN PATENT APPLICATION

(11) **EP 2 589 883 A2**
(43) Date of publication of application: **08.05.2013**
(21) Application number: 12188859.8
(22) Date of filing: 17.10.2012
(51) Int. Cl.: F24D 3/18, F24D 19/10

(54) **Heat pump hydronic heater**

(30) Priority: 18.10.2011 JP 2011228595
(71) Applicant: Panasonic Corporation, Kadoma-shi Osaka 571-8501 (JP)
(72) Inventor: Suita, Yoshitaka, Osaka, 540-6207, (JP)
(74) Representative: Eisenführ, Speiser & Partner

(57) **Abstract**

A heat pump hydronic heater of the present invention includes: a heat pump cycle 2; a plurality of radiating means 13a to 13c; a hot water circulation pump 9; opening/closing means 11a to 11d; and a control section 16, characterized in that when set temperatures of the plurality of radiating means 13a to 13c are different from each other, the opening/closing means 11a to 11d which is connected to the radiating means 13a to 13c other than that 13a to 13c having the highest set temperature is opened and closed with a predetermined period, and closing timings of the plurality of opening/closing means 11a to 11d are set substantially the same. Floor heating panels of a plurality of rooms are operated at different floor temperatures, thereby enhancing comfort.

## Description

### [Technical Field]

The present invention relates to a heat pump hydronic heater for carrying out a heating operation by hot water produced using a heat pump.

### [Background Technique]

Combustible fuel such as petroleum and gas was used as a heat source in conventional heating systems, but in recent years, a market of the heating systems using the heat pump technique is burgeoning.
However, the conventional air conditioner has a problem that feet are not easily warmed, and to solve this problem, hydronic heaters using the heat pump technique have been developed (see patent document 1 for example).

According to the hydronic heater described in patent document 1, heat is exchanged between a high temperature refrigerant and hot water, hot water whose temperature is increased by the heat exchange is sent to a heating terminal such as a floor heating panel, thereby carrying out the heating operation.
The heat pump hydronic heater is formed by combining a refrigeration cycle unit and a hot water circulation unit with each other.

According to the refrigeration cycle unit, a compressor, a refrigerant-side pipe of a water-refrigerant heat exchanger as a condenser, an expansion valve and an evaporator are sequentially connected to one another through refrigerant pipes, thereby forming a refrigeration cycle. Hot water and a high temperature refrigerant heated by the refrigeration cycle are heat-exchanged in the water-refrigerant heat exchanger, thereby heating hot water.
The hot water circulation unit is formed by connecting a circulation water-side pipe of the water-refrigerant heat exchanger, the hot water circulation pump, a hot water tank, and a thermally actuated valve to one another.
A control unit controls the refrigeration cycle unit and the hot water circulation unit. A temperature of hot water is set by a remote control.
If the control unit and the remote control instruct to start a heating operation, a refrigeration cycle operation is carried out in accordance with a hot water temperature which is set by the remote control, the thermally actuated valve registered in the remote control is opened, and the hot water circulation pump is operated. Hot water is made to circulate through a floor heating panel connected to the thermally actuated valve which is opened by the operation of the remote control, thereby carrying out the heating operation.

A plurality of remote controls and a plurality of floor heating panels are connected to the heat pump hydronic heater. When set temperatures of the remote controls corresponding to the respective floor heating panels are different from one another, a temperature rise of a floor temperature of a low temperature set area is lowered to an appropriate temperature by an intermittent operation. The intermittent operation is an operation for opening and closing an on-off valve which opens and closes, with a predetermined period, a supply passage of hot water to a floor heating panel which corresponds to a low temperature set remote control with respect to a floor heating panel other than that corresponding to one of the remote controls having the highest set temperature.

### [Prior Art Document]

### [Patent Document]

[Patent Document 1] Japanese Patent Application Laid-open No.2010-203749

### [Summary of the Invention]

### [Problem to be Solved by the Invention]

According to the conventional heat pump hydronic heater, however, to supply a necessary heat quantity to the floor heating panel, a flow rate of hot water is largely changed as a thermally actuated valve is opened or closed in an intermittent operation and especially when the valve is closed, a flow rate of hot water is reduced. Therefore, a quantity of heat transferred from a refrigerant to hot water is reduced, and the refrigerant becomes a high temperature and high pressure refrigerant. Therefore, it is necessary to operate the refrigeration cycle in a state where the refrigerant is in a high temperature and high pressure state.
In a state where a refrigerant is a high temperature and high pressure refrigerant, the operation of the refrigeration cycle must be stopped frequently for protecting the compressor. However, when the operation of the refrigeration cycle is stopped, since the heating of the refrigeration cycle is stopped, the temperature of hot water is reduced, a surface temperature of the floor heating panel is reduced and there is a tendency that the comfort is deteriorated.

As countermeasures against this problem, patent document 1 describes means for changing a flow rate of the hot water circulation pump but in reality, since a pressure loss of the floor heating panel is high, it is difficult to increase the flow rate of hot water, and there is a problem that it is not possible to sufficiently cool a refrigerant whose temperature and pressure become high.

It is an object of the present invention to provide a heat pump hydronic heater capable of enhancing comfort by operating floor heating panels of a plurality of rooms at different floor temperatures.

### [Means for Solving the Problem]

To solve the above conventional problem, the present invention provides a heat pump hydronic heater comprising: a heat pump cycle which includes a compressor and which heats hot water; a plurality of radiating means; a hot water circulation pump which circulates the hot water heated by the heat pump cycle to the plurality of radiating means; opening/closing means respectively connected to the plurality of radiating means; and a control section, characterized in that when set temperatures of the plurality of radiating means are different from each other, the opening/closing means which is connected to the radiating means other than that having the highest set temperature is opened and closed with a predetermined period, and closing timings of the plurality of opening/closing means are set substantially the same.

### [Effect of the Invention]

According to the present invention, it is possible to provide a heat pump hydronic heater capable of enhancing comfort by operating floor heating panels of a plurality of rooms at different floor temperatures.

### [Brief Description of the Drawings]

Fig. 1 is a circuit block diagram of a heat pump hydronic heater according to a first embodiment of the present invention;
Fig. 2 is a flowchart of a boiling operation of the heat pump hydronic heater; and
Fig. 3 is a time chart when the heat pump hydronic heater is operated.

### [Explanation of Symbols]

- 1: heat pump hydronic heater
- 2: heat pump cycle
- 3: compressor
- 4: air heat exchanger
- 5: air heat exchanger fan
- 6: refrigerant flow rate adjusting valve
- 7: water-refrigerant heat exchanger
- 8: hot water circulation circuit
- 9: hot water circulation pump
- 10: buffer tank
- 11a to 11d: thermally actuated valve (opening/closing means)
- 12a to 12c: remote control
- 13a to 13c: floor heating panel (radiating means)
- 14: in-bound temperature detection sensor
- 15: out-bound temperature detection sensor
- 16: control section

### [Mode for Carrying Out the Invention]

A first aspect of the present invention provides a heat pump hydronic heater comprising: a heat pump cycle which includes a compressor and which heats hot water; a plurality of radiating means; a hot water circulation pump which circulates the hot water heated by the heat pump cycle to the plurality of radiating means; opening/closing means respectively connected to the plurality of radiating means; and a control section, characterized in that when set temperatures of the plurality of radiating means are different from each other, the opening/closing means which is connected to the radiating means other than that having the highest set temperature is opened and closed with a predetermined period, and closing timings of the plurality of opening/closing means are set substantially the same. To predict variation in load, timing for closing the opening/closing means is made constant.

According to a second aspect of the invention, in the first aspect, operation frequency of the compressor is reduced before the opening/closing means is closed. It is possible to avoid a case where a flow rate of hot water is reduced, a quantity of heat transferred from a refrigerant to hot water is reduced, and the refrigerant becomes a high temperature and high pressure refrigerant.

Embodiments of the present invention will be described with reference to the drawings below. The invention is not limited to the embodiments.

### (First Embodiment)

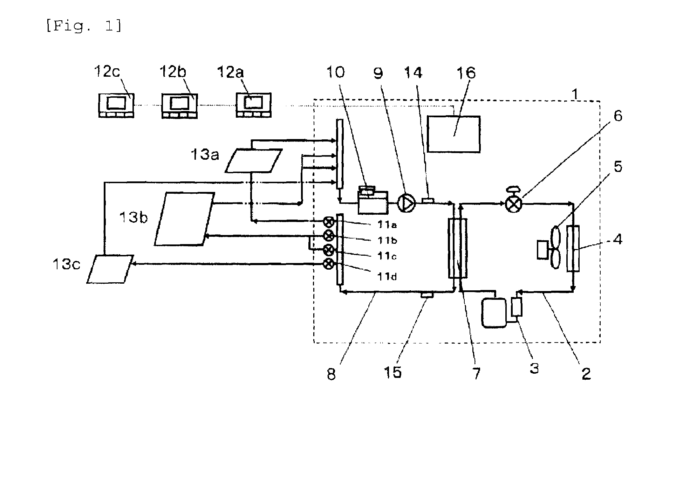

A heat pump hydronic heater according to a first embodiment of the present invention will be described using Figs. 1 to 3.

Fig. 1 is a block diagram of the heat pump hydronic heater 1 to which the present invention is applied. The heat pump hydronic heater 1 includes a heat pump cycle 2, a hot water circulation circuit 8 and a control section 16.

The heat pump cycle 2 includes a compressor 3 which sucks and compresses a refrigerant, and discharges the high temperature and high pressure refrigerant, an air heat exchanger 4 for drawing heat from outdoor air, an air heat exchanger fan 5 which forcibly introduces outdoor air into the air heat exchanger 4, a refrigerant flow rate adjusting valve 6 which adjusts a flow rate of a refrigerant, and a water-refrigerant heat exchanger 7 which heat-exchanges between a refrigerant and hot water.
The hot water circulation circuit 8 includes a hot water circulation pump 9 which is connected to the water-refrigerant heat exchanger 7 and which circulates hot water in the hot water circulation circuit 8, a buffer tank 10 in which hot water is stored, floor heating panels 13a to 13c which are three radiating means for example, and thermally actuated valves 11a to 11d which are opening/closing means for controlling supply of hot water to the respective floor heating panels 13.

The heat pump cycle 2 and the hot water circulation circuit 8 are independent from each other, and a refrigerant and hot water are not mixed. The water-refrigerant heat exchanger 7 has such a configuration that a refrigerant and hot water heat-exchange. A double-pipe heat exchanger or a plate heat exchanger is used as the water-refrigerant heat exchanger 7.
In the hot water circulation circuit 8, an out-bound temperature detection sensor 15 is disposed on a side of an outlet of the water-refrigerant heat exchanger 7. The out-bound temperature detection sensor 15 measures an out-bound temperature To of hot water flowing from the water-refrigerant heat exchanger 7 toward the floor heating panels 13a to 13c.
An in-bound temperature detection sensor 14 is disposed on a side of an inlet of the water-refrigerant heat exchanger 7. The in-bound temperature detection sensor 14 measures an in-bound temperature Ti of hot water returning from the floor heating panels 13a to 13c to the water-refrigerant heat exchanger 7.

The control section 16 is a control program incorporated in a microcomputer (not shown). The control section 16 acquires an outdoor temperature, a discharge temperature of the compressor 3 (both the temperatures are detected by a temperature sensor (not shown)), an out-bound temperature To detected by the out-bound temperature detection sensor 15, and an in-bound temperature Ti detected by the in-bound temperature detection sensor 14. The control section 16 controls frequency of the compressor 3, the number of revolutions of the air heat exchanger fan 5, an opening degree of the refrigerant flow rate adjusting valve 6, and opening/closing operations of the thermally actuated valves 11a to 11d.

Remote controls 12a to 12c and the floor heating panels 13a to 13c are disposed in a room which is to be heated. Although three remote controls 12a to 12c are provided corresponding to the three floor heating panels 13a to 13c in the embodiment, some of the floor heating panels 13a to 13c may be controlled using two remote controls, or all of the floor heating panels 13a to 13c may be controlled using one remote control.

A surface temperature of the floor heating panel can be set by changing a set value of "temperature adjustment" of the remote controls 12a to 12c, and the temperature can be adjusted in ten stages from "high" to "low" by operating a button. In this embodiment, the number of stages is set to "five", a temperature of hot water to be supplied is about 40°C, and a surface temperature of the floor heating panel is about 28°C.
The heat pump hydronic heater 1 is operated by operating the remote controls 12a to 12c, heated hot water is conveyed to the floor heating panels 13a to 13c by the hot water circulation pump 9, the hot water radiates heat and a room is heated.

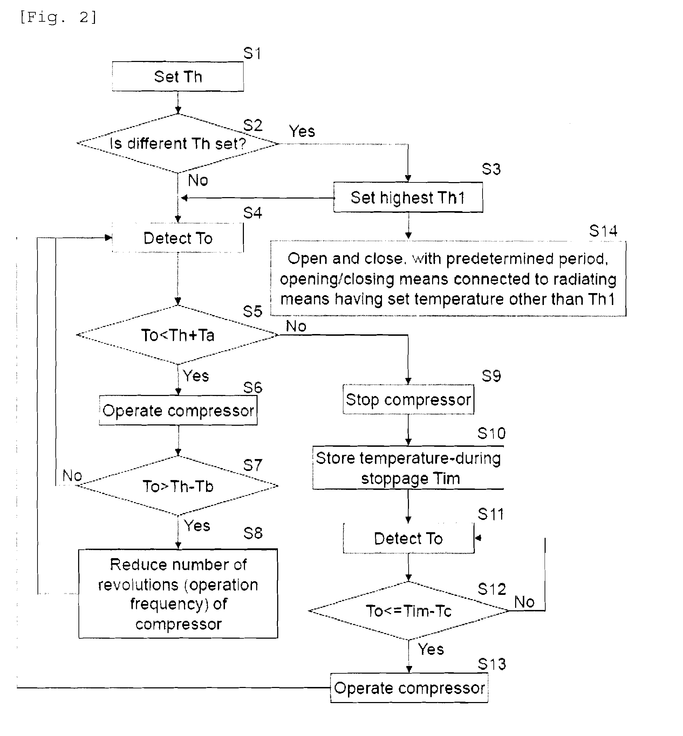

The boiling operation will be described using Fig. 2.
First, a user sets a target out-bound temperature Th of hot water in the water-refrigerant heat exchanger 7 by the remote controls 12 (step 1). Here, it is determined whether different target out-bound temperatures Th are set from the plurality of remote controls 12a to 12c (step 2). If it is determined that different target out-bound temperatures Th are set in step 2, the highest target out-bound temperature Th1 is set (step 3).

The out-bound temperature detection sensor 15 always detects an out-bound temperature To (step 4).
In step 5, the out-bound temperature To and the target out-bound temperature Th are compared with each other. If it is determined in step 5 that the out-bound temperature To is lower than a value in which a predetermined temperature Ta (e.g., 2°C) is added to the target out-bound temperature Th, the compressor 3 is operated (step 6).

If the boiling operation is started by the operation of the compressor 3, the hot water circulation pump 9 is driven and hot water is supplied to the water-refrigerant heat exchanger 7. The boiling operation carried out by the heat pump cycle 2 is continued until the out-bound temperature To detected by the out-bound temperature detection sensor 15 exceeds the target out-bound temperature Th.
As a result, high temperature refrigerant discharged from the compressor 3 flows into the water-refrigerant heat exchanger 7, the high temperature refrigerant radiates heat and high hot water can be produced. In the water-refrigerant heat exchanger 7, water and refrigerant enhance the heat exchanging efficiency as countercurrent.

Next, it is determined whether an out-bound temperature To of hot water supplied from the water-refrigerant heat exchanger 7 detected by the out-bound temperature detection sensor 15 comes close to the target out-bound temperature Th (step 7). If the out-bound temperature To is within a predetermined temperature Tb (e.g., 5°C) with respect to the target out-bound temperature Th, it is determined in step 7 that the out-bound temperature To comes close to the target out-bound temperature Th, and the number of revolutions of the compressor 3 is reduced and the ability is lowered (step 8).

If it is determined in step 5 that the out-bound temperature To detected by the out-bound temperature detection sensor 15 becomes higher than the target out-bound temperature Th by a predetermined temperature Ta (e.g., 2°C), the operation of the compressor 3 is stopped and the carried out is completed (step 9).

Here, even after the boiling operation carried out by the heat pump cycle 2 is completed, the hot water circulation pump 9 is driven and hot water is circulated to the water-refrigerant heat exchanger 7. This is because that even if the boiling operation is being stopped, it is necessary to detect a temperature of hot water by the in-bound temperature detection sensor 14 and the out-bound temperature detection sensor 15, and if the temperature of hot water is lowered, the boiling operation carried out by the heat pump cycle 2 must immediately be restarted.

The in-bound temperature Ti detected when the operation of the compressor 3 is stopped is stored as in-bound temperature-during stoppage Tim (step 10).
Even during the operation of the compressor 3 is stopped also, the hot water circulation pump 9 is driven and the out-bound temperature To is always detected by the out-bound temperature detection sensor 15 (step 11). If it is determined that the out-bound temperature To detected by the out-bound temperature detection sensor 15 becomes lower than the in-bound temperature-during stoppage Tim stored when the operation of the compressor 3 is stopped by a predetermined temperature Tb (e.g., 5°C) (step 12), the operation of the compressor 3 is restarted and the boiling operation is started (step 13).

For example, if the target out-bound temperature Th is set to 55°C as a boiling temperature for example, the operation of the compressor 3 is stopped when the out-bound temperature To detected by the out-bound temperature detection sensor 15 exceeds 57°C (=55°C + 2°C).
At this time, if the in-bound temperature Ti detected by the in-bound temperature detection sensor 14 is 53°C, it is recorded that the in-bound temperature-during stoppage Tim is 53°C.
The hot water circulation pump 9 is driven even after the boiling operation carried out by the compressor 3 is completed. When the out-bound temperature To detected by the out-bound temperature detection sensor 15 becomes lower than the in-bound temperature-during stoppage Tim of the compressor 3 by a predetermined temperature Tc (e.g., 5°C), the operation of the compressor 3 is restarted. The predetermined temperatures Ta, Tb and Tc shown in the embodiment are not limited to those of the embodiment.

A case where an operation is carried out at different target out-bound temperatures Th by the remote controls 12a to 12c which respectively correspond to the plurality of floor heating panels 13a to 13c in step 2 will be described.
When only one of the floor heating panels 13 is operated, a target out-bound temperature Th when an heating operation is carried out based on its temperature setting is determined, but when two or more floor heating panels 13 are operated, the target out-bound temperature Th1 of the floor heating panel 13 is employed (step 3).
A floor heating panel 13 having a low target out-bound temperature Th opens and closes the thermally actuated valves 11b, 11c and 11d with a predetermined period, and an input heat quantity to the floor heating panel 13 is adjusted (step 14).

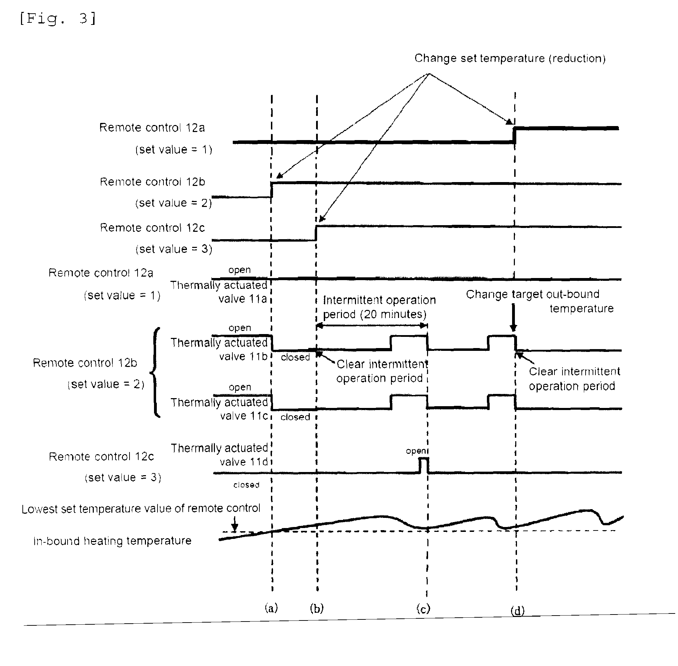

Fig. 3 is a timing chart of an operation example at different target out-bound temperatures Th with the remote controls 12a to 12c which respectively corresponds to the plurality of floor heating panels 13a to 13c.

During operation with the remote control 12a (target out-bound temperature Th1 is set) having a high set temperature of the three remote controls 12a to 12c, if a set temperature which is lower than the remote control 12a (target out-bound temperature Th1) is instructed from the remote control 12b, and if a set temperature lower than the remote control 12a (target out-bound temperature Th1) is instructed from the remote control 12c thereafter, since the set temperatures are different, intermittent operations of the thermally actuated valves 11b and 11c which are registered in the remote control 12b are started and then, an intermittent operation of the thermally actuated valve 11d registered in the remote control 12c is started, and the intermittent operations having the same closing timing of the thermally actuated valves 11b, 11c and 11d are carried out with a predetermined period.
In Fig. 3, if a set temperature lower than the remote control 12a is instructed by the remote control 12b, the opened thermally actuated valves 11b and 11c are closed, and the intermittent operations are started (timing (a)).
Next, if a set temperature lower than that instructed by the remote control 12a is instructed by the remote control 12c, the closed thermally actuated valves 11b and 11c maintain their closed state, and the intermittent operations are started (timing (b)). At this time, if a set temperature lower than the remote control 12a is instructed by the remote control 12c before the opening operations of the thermally actuated valves 11b and 11c carried out by the period of the intermittent operation are carried out, the intermittent operations of the thermally actuated valves 11b and 11c are reset, and the intermittent operations are newly started from timing (b).
If the thermally actuated valve 11d is opened during the opening operation of the thermally actuated valves 11b and 11c in the intermittent operations, the thermally actuated valve 11d is closed at closing timing of the thermally actuated valves 11b and 11c in the intermittent operations (timing (c)).
If the set temperature is changed by the remote control 12a during the opening operations of the thermally actuated valves 11b and 11c in the intermittent operations, the intermittent operations of the thermally actuated valves 11b and 11c are reset at this changing timing, and the thermally actuated valves 11b and 11c are closed (timing (d)).

As described above, whenever a factor for varying the intermittent operation period is generated, the period is reset, and it is possible to perform the control while always predicting the flow rate reduction timing caused by the intermittent operation.
According to this configuration, during the operation with different target out-bound temperatures Th by the remote controls 12a to 12c which respectively correspond to the plurality of floor heating panels 13a to 13c, operation is carried out while reducing the operation frequency which is heating ability of the compressor 3 of the heat pump cycle 2 before the thermally actuated valves 11b, 11c and 11d are closed. Therefore, it is possible to avoid a case where the hot water flow rate is reduced, a quantity of heat transferred from a refrigerant to hot water is reduced and the refrigerant becomes the high temperature and high pressure refrigerant.

As described above, the present invention can provide a heat pump hydronic heater which can be operated at different target out-bound temperatures with the remote controls 12a to 12c which respectively correspond to the plurality of floor heating panels 13a to 13c while enhancing the comfort.

### [Industrial Applicability]

According to the heat pump hydronic heater of the present invention, the floor heating panels of a plurality of rooms are operated at different floor temperatures, thereby enhancing the comfort. Therefore, the invention can be applied to heating devices such as a water heater including a hot water circuit, a floor heating device, and a hot water heating device.

## Claims

1. A heat pump hydronic heater comprising:
a heat pump cycle which includes a compressor and which heats hot water;
a plurality of radiating means;
a hot water circulation pump which circulates the hot water heated by the heat pump cycle to the plurality of radiating means;
opening/closing means respectively connected to the plurality of radiating means; and
a control section, **characterized in that**
when set temperatures of the plurality of radiating means are different from each other, the opening/closing means which is connected to the radiating means other than that having the highest set temperature is opened and closed with a predetermined period, and closing timings of the plurality of opening/closing means are set substantially the same.

2. The heat pump hydronic heater according to claim 1, **characterized in that** operation frequency of the compressor is reduced before the opening/closing means is closed.
